# EUROPÄISCHE PATENTANMELDUNG

(11) **EP 1 094 173 A2**
(43) Veröffentlichungstag der Anmeldung: **25.04.2001**
(21) Anmeldenummer: 99121392.7
(22) Anmeldetag: 27.10.1999
(51) Int. Cl.: E04F 13/08, E04F 15/024, E04D 11/00, E06B 1/60, F16M 7/00, F16B 2/14

(54) **Auflager für Bau- oder Montageplatten**

(30) Priorität: 18.10.1999 DE 29918246 U
(71) Anmelder: Steffens, Sandra, 21465 Reinbek (DE)
(72) Erfinder: Steffens, Sandra, 21465 Reinbek (DE)
(74) Vertreter: Heun, Thomas

(57) **Zusammenfassung**

Es wird ein Auflager zum Lagern von Bau- oder Montageplatten an einem Unterbau beschrieben, das sich durch mindestens ein erstes und ein zweites keilförmiges Element (1, 2) mit jeweils einer Auflagefläche (1a, 2a) für mindestens eine solche Platte bzw. den Unterbau, sowie jeweils einer Schrägfläche (1b, 2b) auszeichnet, wobei die keilförmigen Elemente relativ zueinander in Richtung zumindest einer der Steigungen der Schrägflächen so verschiebbar sind, daß eine auf einer der Auflageflächen ruhende Platte gegenüber dem Unterbau nivellierbar ist.

## Beschreibung

Die Erfindung betrifft ein Auflager zum Lagern von Bauplatten wie zum Beispiel Gehwegplatten, Fahrbahnplatten, Platten für Parkplätze und Parkdächer, oder Fassadenplatten bzw. deren Trag- oder Unterkonstruktionen, wie sie zum Beispiel zur Verkleidung von Gebäuden verwendet werden, an einem Unterbau. Der Unterbau kann dabei ein im wesentlichen horizontaler Untergrund, eine Gebäudewand, eine Mauer o.ä. sein. Das Auflager ist auch zum Lagern von Grund- oder Montageplatten geeignet, auf denen zum Beispiel Maschinen o.ä. montiert sind.

Platten dieser Art sind je nach Anwendungszweck im allgemeinen aus Beton, Dämmmaterial, Metall oder anderen Materialien. Die Platten müssen beim Verlegen bzw. der Lagerung im allgemeinen nivelliert oder zumindest so zueinander ausgerichtet werden, daß sie eine ebene Oberfläche bilden und an ihren Übergängen keine Absätze vorhanden sind. Die Lagerung muß außerdem so stabil sein, daß sich solche Absätze auch nach längerem Gebrauch nicht durch ein Absinken einzelner Platten in den Untergrund bilden. Hierdurch können Unfälle bzw. Undichtigkeiten, Schmutzansammlungen usw. verursacht werden. Aus diesen Gründen ist eine in vielen Fällen recht aufwendige Vorbereitung des Untergrundes erforderlich, die das Verlegen der Platten je nach Anwendung und den äußeren Gegebenheiten sehr zeit- und kostenaufwendig machen kann.

Der Erfindung liegt deshalb die Aufgabe zugrunde, nach einer Möglichkeit zu suchen, mit der solche Platten unter Berücksichtigung dieser Gesichtspunkte wesentlich einfacher und schneller verlegt bzw. gelagert werden können.

Gelöst wird diese Aufgabe gemäß Anspruch 1 mit einem Auflager zum Lagern von Bau- oder Montageplatten an einem Unterbau, das sich auszeichnet durch mindestens ein erstes und ein zweites keilförmiges Element mit jeweils einer Auflagefläche für mindestens eine solche Platte bzw. den Unterbau, sowie jeweils einer Schrägfläche, wobei die keilförmigen Elemente relativ zueinander in Richtung zumindest einer der Steigungen der Schrägflächen so verschiebbar sind, daß eine auf einer der Auflageflächen ruhende Platte gegenüber dem Unterbau nivellierbar ist.

Mit diesem Auflager ist eine besonders einfache, schnelle und genaue Nivellierung der eingangs genannten Platten möglich.

Ein besonderer Vorteil dieser Lösung besteht darin, daß das Auflager mit nahezu beliebigen Höhen und Durchmessern einfach und kostengünstig hergestellt werden kann, so daß es universell für alle gängigen Platten der eingangs genannten Art und auch bei relativ weichem Untergrund (in diesem Fall wird der Durchmesser entsprechend größer gewählt) anwendbar ist. Dies und die erhebliche Zeitersparnis führen insgesamt zu wesentlich geringeren Gesamtkosten beim Verlegen der betreffenden Platten.

Die Unteransprüche haben vorteilhafte Weiterbildungen der Erfindung zum Inhalt.

Danach sind die keilförmigen Elemente vorzugsweise aus Gummigranulat hergestellt.

Sie können durch Beschichtung oder Bearbeitung auch so beschaffen sein, daß die Reibung zumindest im Bereich der Schrägfläche erhöht ist, so daß die Schrägflächen eine große Steigung haben können.

In Draufsicht ist das Auflager vorzugsweise im wesentlichen kreisförmig, es kann jedoch auch quadratisch oder rechteckig sein oder andere Formen haben.

Zur Anwendung des Auflagers für Fassadenplatten bzw. deren Trag- oder Unterkonstruktionen weisen die keilförmigen Elemente vorzugsweise entlang eines Teils des Durchmessers einen im wesentlichen senkrecht zu der jeweiligen Auflagefläche verlaufenden Schlitz auf, der sich in Richtung der Steigung erstreckt und durch den ein in dem Unterbau zu verankerndes Befestigungsmittel für eine Fassadenplatte bzw. deren Trag- oder Unterkonstruktionen hindurchgeführt werden kann.

Weitere Einzelheiten, Merkmale und Vorteile der Erfindung ergeben sich aus der folgende Beschreibung von zwei bevorzugten Ausführungsformen anhand der Zeichnung. Es zeigt:
Fig. 1 eine schematische seitliche Ansicht der ersten Ausführungsform in einer Grundstellung;
Fig. 2 die erste Ausführungsform gemäß Figur 1 in einer verschobenen Stellung;
Fig. 3 eine Draufsicht auf die erste Ausführungsform; und
Fig. 4 eine Draufsicht auf die zweite Ausführungsform der Erfindung.

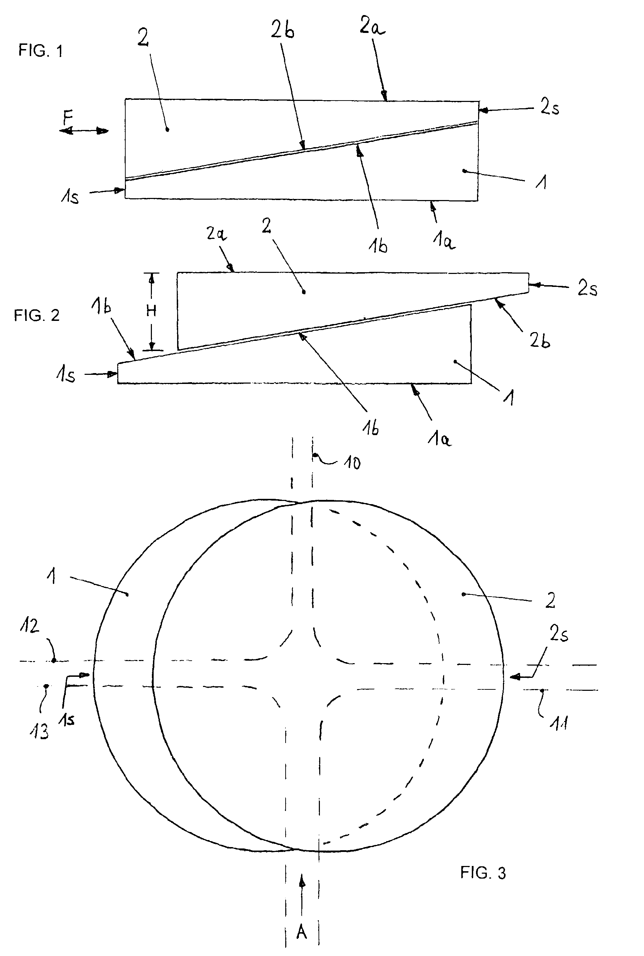

Ein erfindungsgemäßes Auflager für Bau- oder Monatgeplatten umfaßt gemäß Figur 1 ein erstes keilförmiges Element 1 und ein zweites keilförmiges Element 2 mit jeweils einer Schmalseite 1s, 2s. Die Elemente weisen ferner jeweils eine Auflagefläche 1a, 2a für eine Bauplatte bzw. einen Unterbau, sowie eine Schrägfläche 1b, 2b auf, die gegenüber der Auflagefläche schräg verläuft, d.h. eine Steigung aufweist.

Zur Anwendung werden die keilförmigen Elemente in der in Figur 1 gezeigten Grundstellung mit ihren Schrägflächen 1b, 2b aneinandergelegt und in der Weise auf dem Unterbau, auf dem die Platten zu lagern sind, verteilt, daß sie ein Auflager, vorzugsweise für jeweils zwei oder vier benachbarte Platten bilden. Bei dem anschließenden Verlegen der Platten wird gleichzeitig auch geprüft, ob diese jeweils gleiche Höhe aufweisen und die Gesamtoberfläche eben ist. Wenn dies nicht der Fall ist, wird das Auflager, auf dem die betreffenden Platten ruhen, in seiner Höhe verstellt, indem das zweite keilförmige Element 2 gegenüber dem ersten keilförmigen Element 1 in horizontaler Richtung gemäß dem Pfeil F in Figur 1, das heißt in Richtung der Steigungen, verschoben wird. Wenn nun beispielhaft die in Figur 2 angedeutete verschobene Stellung eingenommen worden ist (Ansicht gemäß Pfeil A in Figur 3), hat sich die Höhe des Auflagers entsprechend der Steigung der Schrägflächen 1b, 2b und dem Ausmaß der Verschiebung verändert. Damit ist in sehr einfacher und genauer Weise eine Nivellierung der Platten möglich.

Die keilförmigen Elemente sind vorzugsweise aus Gummigranulat hergestellt, da dieses Material einerseits rutschfest und andererseits weich ist und dadurch auch Unebenheiten in dem Unterbau aufnehmen kann. Alternativ dazu können zur Herstellung auch Kunststoffe oder andere geeignete Materialien gewählt werden, wobei die keilförmigen Elemente nicht aus dem gleichen Material bestehen müssen.

Die Steigung der Schrägflächen 1b, 2b wird in Abhängigkeit von deren Rauhigkeit bzw. Rutschfestigkeit so gewählt, daß eine unbeabsichtigte Verschiebung der keilförmigen Elemente in eingebautem Zustand ausgeschlossen ist. Zur Erhöhung der Haftung können die Schrägflächen 1b, 2b auch entsprechend bearbeitet oder beschichtet sein.

Die keilförmigen Elemente brauchen nicht unbedingt eine zueinander symmetrische Querschnittsform aufzuweisen.

Die maximale Höhe H der keilförmigen Elemente beträgt zum Beispiel mindestens etwa 5 mm, es ist jedoch auch nahezu jede andere Höhe denkbar.

Figur 3 zeigt eine Draufsicht auf das erfindungsgemäße Auflager 1, 2. Gestrichelt angedeutet sind außerdem die Eckenbereiche von vier Bauplatten 10, 11, 12, 13, wie sie auf dem Auflager ruhen würden. Das Auflager befindet sich etwa in der in Figur 2 gezeigten, verschobenen Stellung. Außerdem wird deutlich, daß die keilförmigen Elemente 1, 2 kreisförmig sind. Diese Ausführungsform hat den Vorteil, daß sich im Bereich des Auflagers kaum Schmutz ansammeln kann. Die keilförmigen Elemente können jedoch auch rechteckig oder quadratisch sein oder beliebige andere Formen aufweisen.

Der Durchmesser der keilförmigen Elemente ist ebenso wie deren maximale Höhe H nahezu beliebig wählbar und hängt im wesentlichen von der vorgesehenen Anwendung, das heißt der gewünschten Tragkraft und auch der Art und Festigkeit des Untergrundes ab.

Um das gegenseitige Verschieben der keilförmigen Elemente in Richtung der Steigungen der Schrägflächen (Pfeil F in Figur 1) zu erleichtern, können die Schrägflächen auch mit korrespondierenden Führungen versehen sein, die ineinander greifen. Beispielhaft sei hierzu eine Nut-Feder-Anordnung genannt.

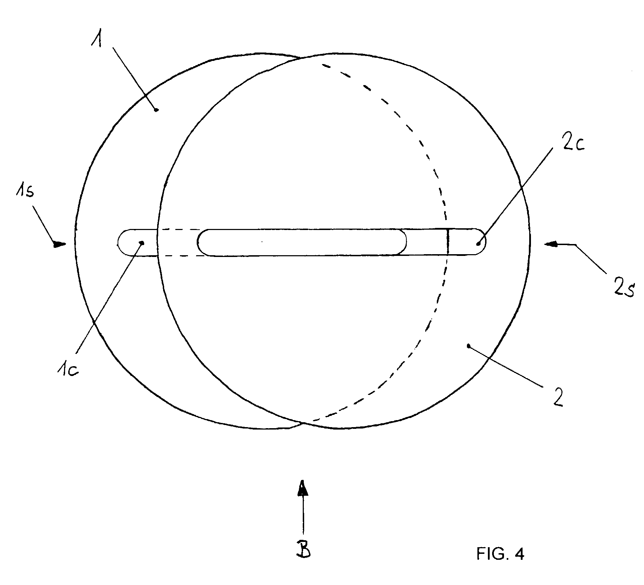

Figur 4 zeigt eine zweite Ausführungsform der Erfindung in Draufsicht. Der wesentliche Unterschied zu der ersten Ausführungsform besteht darin, daß hierbei die beiden Keilelemente 1, 2 jeweils einen Schlitz 1c; 2c aufweisen, der sich auf einer Länge von zum Beispiel etwa zwei Dritteln bis drei Vierteln des Durchmessers des jeweiligen Keilelementes entlang seines Durchmessers durch dieses hindurch erstreckt, und zwar im wesentlichen senkrecht zu der jeweiligen Auflagefläche. Der Schlitz verläuft dabei in Richtung der Steigung (Pfeil F in Figur 1) des jeweiligen Keilelementes 1, 2 und ist somit im wesentlichen mittig und vorzugsweise zentriert angeordnet. Zur Erzielung einer ausreichenden Festigkeit des Auflagers sollten die Schlitzenden einen Abstand von zum Beispiel mindestens etwa 1 bis 1,5 cm vom benachbarten Rand des keilförmigen Elementes aufweisen. Als schematische seitliche Ansicht gemäß Pfeil B ergibt sich für diese Ausführungsform in dieser verschobenen Stellung wiederum die Darstellung in Figur 2.

Damit wird die Möglichkeit eröffnet, das erfindungsgemäße Auflager auch an senkrechten oder schrägen Wänden für Fassaden- oder Wandplatten zu verwenden, bei denen ein Befestigungsmittel für die Platten in der Wand zu verankern ist. Alternativ dazu kann das Auflager auch zur Nivellierung einer entsprechenden Tragkonstruktion verwendet werden, an der dann die Platten montiert werden. In beiden Fällen dienen die Schlitze zum Hindurchführen der Befestigungsmittel.

Es sei angenommen, daß in einem solchen Fall die Tragkonstruktion mittels Schrauben an der Wand befestigt wird. Zur Nivellierung der Tragkonstruktion wird das erfindungsgemäße Auflager zwischen die Tragkonstruktion und die Wand eingebracht, und zwar in der Weise, daß jeweils eine Schraube von der Tragkonstruktion durch die Schlitze der Keilelemente in die Wand geführt werden kann. Die Schlitze liegen dabei vorzugsweise waagerecht, so daß die Keilelemente nicht verrutschen können. Vor dem Anziehen der betreffenden Schraube werden die Keilelemente entlang ihrer Schrägflächen so gegeneinander verschoben, daß ein gewünschter Abstand zwischen Wand und Tragkonstruktion erzielt wird, um auf diese Weise eine Nivellierung vorzunehmen.

Das erfindungsgemäße Auflager kann weiterhin auch zur Nivellierung des Standes von laufenden Maschinen oder deren Grund- oder Montageplatten sowie zur Dämpfung von Vibrationen solcher Maschinen eingesetzt werden. Zu diesem Zweck sind die Auflager vorzugsweise aus einem Hartgummi, Gummigranulat oder ähnlichem hergestellt, so daß damit ein "Wandern" der Maschine sicher verhindert werden kann. Die Auflager sind entweder direkt an der Maschine oder an einer geeigneten Montageplatte montiert, an der die Maschine befestigt ist.

## Patentansprüche

1. Auflager zum Lagern von Bau- oder Montageplatten an einem Unterbau,
gekennzeichnet durch mindestens ein erstes und ein zweites keilförmiges Element (1, 2) mit jeweils einer Auflagefläche (1a, 2a) für mindestens eine solche Platte bzw. den Unterbau, sowie jeweils einer Schrägfläche (1b, 2b), wobei die keilförmigen Elemente relativ zueinander in Richtung zumindest einer der Steigungen der Schrägflächen so verschiebbar sind, daß eine auf einer der Auflageflächen ruhende Platte gegenüber dem Unterbau nivellierbar ist.

2. Auflager nach Anspruch 1,
dadurch gekennzeichnet, daß die keilförmigen Elemente (1, 2) aus Gummigranulat hergestellt sind.

3. Auflager nach Anspruch 1 oder 2,
dadurch gekennzeichnet, daß die keilförmigen Elemente (1, 2) durch Beschichtung oder Bearbeitung so beschaffen sind, daß die Reibung zumindest im Bereich der Schrägfläche (1b, 2b) erhöht ist.

4. Auflager nach einem der vorhergehenden Ansprüche,
dadurch gekennzeichnet, daß die keilförmigen Elemente (1, 2) in Draufsicht auf das Auflager im wesentlichen kreisförmig sind.

5. Auflager nach einem der vorhergehenden Ansprüche,
dadurch gekennzeichnet, daß die keilförmigen Elemente (1, 2) entlang eines Teils des Durchmessers einen im wesentlichen senkrecht zu der jeweiligen Auflagefläche (1a; 2a) verlaufenden Schlitz (1c; 2c) aufweisen, der sich in Richtung der Steigung erstreckt und durch den ein in dem Unterbau zu verankerndes Befestigungsmittel für eine Platte oder eine entsprechende Tragkonstruktion hindurchgeführt werden kann.

6. Auflager nach Anspruch 5,
dadurch gekennzeichnet, daß sich der Schlitz (1c; 2c) auf einer Länge von etwa zwei Dritteln bis drei Vierteln des Durchmessers im wesentlichen zentriert und im wesentlichen mittig durch jedes keilförmige Element (1, 2) erstreckt.
